# EUROPEAN PATENT SPECIFICATION

(11) **EP 3 871 827 B1**
(45) Date of publication and mention of the grant of the patent: **24.05.2023**
(21) Application number: 19876608.1
(22) Date of filing: 21.10.2019
(51) Int. Cl.: B23K 26/38, B23K 26/082, B23K 37/02, B23K 37/04, B23K 26/08

(54) **LASER MACHINING DEVICE AND LASER MACHINING METHOD**
LASERBEARBEITUNGSVORRICHTUNG UND LASERBEARBEITUNGSVERFAHREN
DISPOSITIF D'USINAGE LASER ET PROCÉDÉ D'USINAGE LASER

(30) Priority: 22.10.2018 JP 2018198280; 12.12.2018 JP 2018232271; 04.01.2019 JP 2019000062
(43) Date of publication of application: 01.09.2021
(73) Proprietor: Amada Co., Ltd., Isehara-shi, Kanagawa 259-1196 (JP)
(72) Inventor: TANAKA Yoichi, Isehara-shi, Kanagawa 259-1196 (JP); KAWAHARA Chiaki, Isehara-shi, Kanagawa 259-1196 (JP); FUNAKI Koji, Isehara-shi, Kanagawa 259-1196 (JP); MAKIGUCHI Kazuya, Isehara-shi, Kanagawa 259-1196 (JP)
(74) Representative: Grünecker Patent- und Rechtsanwälte PartG mbB
(86) International application number: PCT/JP2019/041255
(87) International publication number: WO 2020/085279

(56) References cited:
- WO-A1-2015/156119
- WO-A1-2018/151378
- JP-A- H07 236 987
- JP-A- H07 236 987
- JP-A- 2010 214 393
- JP-A- 2011 025 272
- JP-A- 2016 055 326
- JP-A- 2018 094 588
- JP-A- 2018 094 588
- JP-A- 2018 528 082
- KR-A- 20160 143 286

## Description

### Technical Field

The present disclosure relates to a laser machining apparatus and a laser machining method.

### Background Art

Laser machining apparatuses that cut sheet metals by laser beams emitted from laser oscillators, and produce products having predetermined shapes are widely used. Non-Patent Literature 1 describes cutting a sheet metal while vibrating a laser beam in a predetermined vibration pattern. Patent Literature 1 describes cutting a sheet metal by displacing a laser beam emitted from an opening of a nozzle attached to a tip end of a machining head to a front side in a cutting advancing direction from a center of the opening.

Patent Literature 2 discloses the preambles of the independent claims. Further examples of laser machining apparatuses and a laser machining methods are disclosed in Patent Literature 3 to 5.

### Citation List

### Patent Literature

Patent Literature 1: International Publication No. WO 2015/156119
Patent Literature 2: JP 2018 094588 A
Patent Literature 3: WO 2018/151378 A1
Patent Literature 4: KR 2016 0143286 A
Patent Literature 5: JP 2016 055326 A

### Non-Patent Literature

Non-Patent Literature 1: JANUARY 2017 The FABRICATOR 67, Shaping the beam for the best cut

### Summary

When a laser machining apparatus cuts a sheet metal while vibrating a laser beam in a predetermined vibration pattern, it is required to vibrate the laser beam in a preset vibration pattern with high precision. When the laser machining apparatus produces a product by cutting a sheet metal by displacing the laser beam to a front side in a cutting advancing direction from a center of an opening of a nozzle, it is required to displace the laser beam with high precision. One or more embodiments has or have an object to provide a laser machining apparatus and a laser machining method that can vibrate or displace a laser beam with high precision.

The present invention, solving the above problem, is defined in independent claims 1 and 3. Preferred embodiments are laid down in the dependent claims.

According to the laser machining apparatus and the laser machining method of the present invention, the laser beam can be vibrated or displaced with high precision.

### Brief Description of Drawings

[Figure 1] Figure 1 is a diagram illustrating an entire configuration example of a laser machining apparatus of one or more embodiments.
[Figure 2] Figure 2 is a perspective view illustrating detailed configuration examples of a collimator unit and a machining head in the laser machining apparatus of one or more embodiments.
[Figure 3] Figure 3 is a diagram for explaining a displacement of an irradiation position of a laser beam to a sheet metal by a beam vibration/displacement mechanism.
[Figure 4A] Figure 4A is a diagram illustrating a parallel vibration pattern of the laser beam.
[Figure 4B] Figure 4B is a diagram illustrating an orthogonal vibration pattern of the laser beam.
[Figure 4C] Figure 4C is a diagram illustrating a circular vibration pattern of the laser beam.
[Figure 4D] Figure 4D is a diagram illustrating a C-shaped vibration pattern of the laser beam.
[Figure 4E] Figure 4E is a diagram illustrating an 8-shaped vibration pattern of the laser beam.
[Figure 5] Figure 5 is a diagram illustrating an actual vibration pattern at a time of using the orthogonal vibration pattern illustrated in Figure 4B.
[Figure 6] Figure 6 is a functional configuration example of an NC device included by the laser machining apparatus of one or more embodiments, and is a block diagram illustrating a configuration for vibrating the laser beam in a predetermined vibration pattern.
[Figure 7] Figure 7 is a diagram illustrating one example of a machining program.
[Figure 8] Figure 8 is a diagram illustrating one example of a machining condition file.
[Figure 9] Figure 9 is a table showing a first parameter for determining each vibration pattern.
[Figure 10] Figure 10 is a table showing a setting list for setting a vibration pattern number and a second parameter for determining each vibration pattern correspondingly to each machining condition number.
[Figure 11] Figure 11 is a diagram illustrating a relationship between a first control period at a time of a moving mechanism moving a machining head, and a second control period at a time of the beam vibration/displacement mechanism vibrating or displacing the laser beam.
[Figure 12] Figure 12 is a comparative example, and is a diagram conceptually illustrating an operation in a case of controlling vibration of the laser beam with the first control period.
[Figure 13] Figure 13 is a diagram conceptually illustrating an operation in a case of controlling the vibration of the laser beam with the second control period.
[Figure 14A] Figure 14A is a diagram conceptually illustrating an operation in a case where a beam spot is located at a corner of a product, and the laser beam is vibrated to a front side.
[Figure 14B] Figure 14B is a diagram conceptually illustrating an operation in a case where the beam spot is located at the corner of the product, and the laser beam is vibrated to a rear side.
[Figure 15] Figure 15 is a partially exploded side view conceptually illustrating a flow of assist gas at a time of displacing an irradiation position of the laser beam to a sheet metal to a front side in a cutting advancing direction by a beam displacement mechanism.
[Figure 16] Figure 16 is a functional configuration example of the NC device included by the laser machining apparatus of one or more examples not covered by the present invention, and is a block diagram illustrating a configuration for displacing the laser beam.
[Figure 17] Figure 17 is a comparative example, and is a diagram conceptually illustrating an operation in a case of controlling displacement of the laser beam with the first control period.
[Figure 18] Figure 18 is a diagram conceptually illustrating an operation in a case of controlling displacement of the laser beam with the second control period.
[Figure 19] Figure 19 is a diagram conceptually illustrating a control operation of displacement of the laser beam which is preferable when the laser machining apparatus cuts a periphery of a corner of a product.

### Description of Embodiments

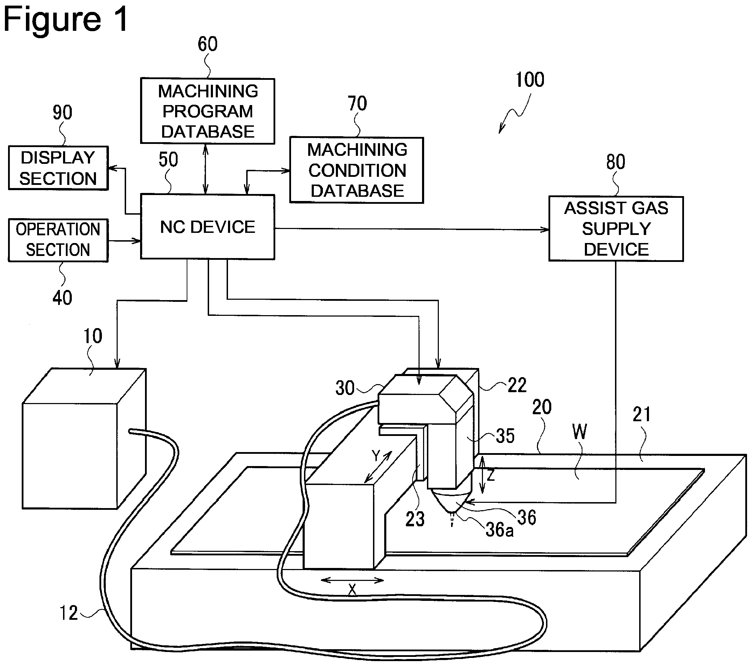

Hereinafter, a laser machining apparatus and a laser machining method of one or more embodiments will be described with reference to the accompanying drawings. In Figure 1, a laser machining apparatus 100 includes a laser oscillator 10 that generates and emits a laser beam, a laser machining unit 20, and a process fiber 12 that transmits the laser beam emitted by the laser oscillator 10 to the laser machining unit 20.

Further, the laser machining apparatus 100 includes an operation section 40, an NC device 50, a machining program database 60, a machining condition database 70, an assist gas supply device 80, and a display section 90. The NC device 50 is an example of a control device that controls respective parts of the laser machining apparatus 100.

As the laser oscillator 10, a laser oscillator that amplifies an excitation beam emitted from a laser diode to emit a laser beam of a predetermined wavelength, or a laser oscillator that directly uses a laser beam emitted by a laser diode is preferable. The laser oscillator 10 is, for example, a solid laser oscillator, a fiber laser oscillator, a disk laser oscillator, or a direct diode laser oscillator (DDL oscillator).

The laser oscillator 10 emits a laser beam in a band of 1 µm with a wavelength of 900 nm to 1100 nm. Taking a fiber laser oscillator and a DDL oscillator as examples, the fiber laser oscillator emits a laser beam with a wavelength of 1060 nm to 1080 nm, and the DDL oscillator emits a laser beam with a wavelength of 910 nm to 950 nm.

The laser machining unit 20 has a machining table 21 where a sheet metal W to be machined is placed, a gate-type X-axis carriage 22, a Y-axis carriage 23, a collimator unit 30 fixed to the Y-axis carriage 23, and a machining head 35. The X-axis carriage 22 is configured to be movable in an X-axis direction on the machining table 21. The Y-axis carriage 23 is configured to be movable in a Y-axis direction perpendicular to the X-axis on the X-axis carriage 22. The X-axis carriage 22 and the Y-axis carriage 23 function as a moving mechanism that moves the machining head 35 in the X-axis direction, the Y-axis direction, or an arbitrary composition direction of the X-axis and a Y-axis, along a surface of the sheet metal W.

Instead of moving the machining head 35 along the surface of the sheet metal W, a position of the machining head 35 may be fixed, and the sheet metal W may be configured to move. The laser machining apparatus 100 can include the moving mechanism that moves the machining head 35 relatively to the surface of the sheet metal W.

To the machining head 35, a nozzle 36 that has a circular opening 36a at a tip end portion, and emits a laser beam from the opening 36a is attached. The sheet metal W is irradiated with the laser beam emitted from the opening 36a of the nozzle 36. The assist gas supply device 80 supplies nitrogen, oxygen, mixed gas of nitrogen and oxygen, or air to the machining head 35 as assist gas. At a time of machining the sheet metal W, the assist gas is blown to the sheet metal W from the opening 36a. The assist gas discharges molten metal in a kerf width where the sheet metal W is melted.

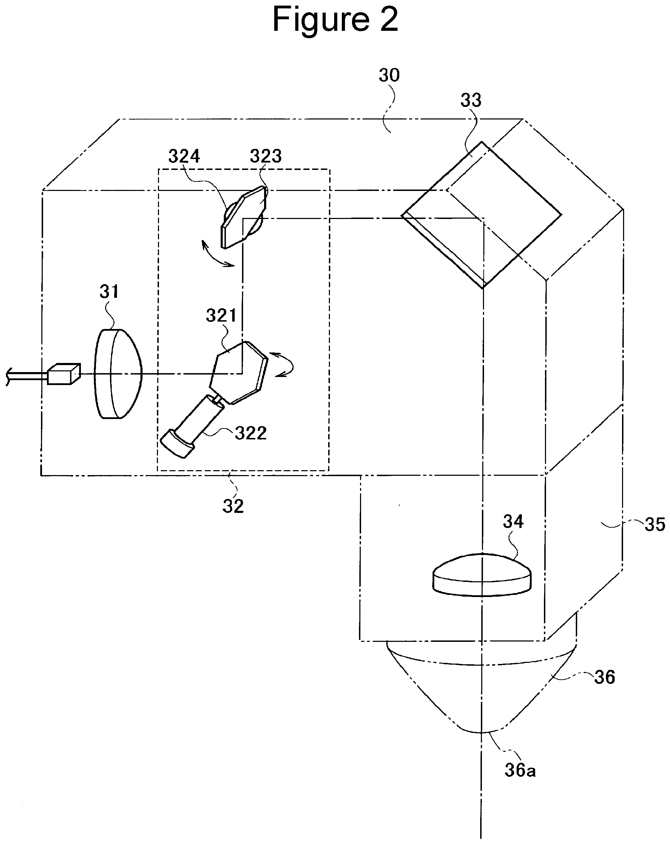

As illustrated in Figure 2, the collimator unit 30 includes a collimation lens 31 that converts a laser beam of a divergent beam emitted from the process fiber 12 into a parallel beam (collimated beam). Further, the collimator unit 30 includes a galvano scanner unit 32, and a bend mirror 33 that reflects a laser beam emitted from the galvano scanner unit 32 toward a lower part in a Z-axis direction perpendicular to the X-axis and the Y-axis. The machining head 35 includes a focusing lens 34 that focuses the laser beam reflected by the bend mirror 33, and irradiates the sheet metal W.

In order to adjust a focal point position of the laser beam, the focusing lens 34 is configured to be movable in a direction to approach the sheet metal W and a direction to separate from the sheet metal W by a drive section and a moving mechanism not illustrated.

The laser machining apparatus 100 is centered so that the laser beam emitted from the opening 36a of the nozzle 36 is located at a center of the opening 36a. In a regular state, the laser beam is emitted from the center of the opening 36a. The galvano scanner unit 32 functions as a beam vibration/displacement mechanism that vibrates or displaces the laser beam that advances in the machining head 35 and is emitted from the opening 36a, in the opening 36a. How the galvano scanner unit 32 vibrates or displaces the laser beam will be described later.

The galvano scanner unit 32 has a scanning mirror 321 that reflects the laser beam emitted from the collimation lens 31, and a drive section 322 that rotates the scanning mirror 321 to a predetermined angle. Further, the galvano scanner unit 32 has a scanning mirror 323 that reflects the laser beam emitted from the scanning mirror 321, and a drive section 324 that rotates the scanning mirror 323 to a predetermined angle.

The drive sections 322 and 324 can reciprocally vibrate the scanning mirrors 321 and 323 within a predetermined angle range respectively based on control by the NC device 50. By reciprocally vibrating either one or both of the scanning mirror 321 and the scanning mirror 323, the galvano scanner unit 32 can vibrate the laser beam with which the sheet metal W is irradiated. Further, the drive sections 322 and 324 set either one or both of the scanning mirror 321 and the scanning mirror 323 at a predetermined angle based on control by the NC device 50, and thereby the galvano scanner unit 32 can displace the laser beam with which the sheet metal W is irradiated in a predetermined direction.

The galvano scanner unit 32 is one example of the beam vibration/displacement mechanism that functions as a beam vibration mechanism or a beam displacement mechanism, and the beam vibration/displacement mechanism is not limited to the galvano scanner unit 32 having a pair of scanning mirrors.

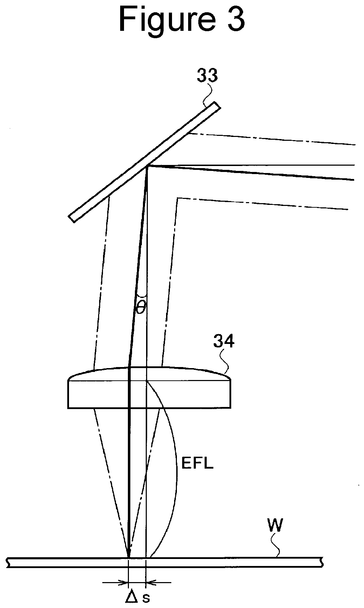

Figure 3 illustrates a state where either one or both of the scanning mirror 321 and the scanning mirror 323 is or are tilted, and a position of the laser beam with which the sheet metal W is irradiated is displaced. In Figure 3, a fine solid line that is bent by the bend mirror 33 and passes through the focusing lens 34 shows an optical axis of the laser beam at the time of the laser machining apparatus 100 being in the regular state.

Note that, in detail, an angle of the optical axis of the laser beam that is incident on the bend mirror 33 changes by an operation of the galvano scanner unit 32 located in front of the bend mirror 33, and the optical axis deviates from a center of the bend mirror 33. In Figure 3, for simplification, incident positions of the laser beams onto the bend mirror 33 are assumed to be same positions before and after the operation of the galvano scanner unit 32.

The optical axis of the laser beam is assumed to be displaced from the position shown by the fine solid line to a position shown by a thick solid line by the action by the galvano scanner unit 32. When the laser beam reflected by the bend mirror 33 is assumed to incline at an angle θ, an irradiation position of the laser beam onto the sheet metal W is displaced by a distance Δs. When a focal length of the focusing lens 34 is EFL (Effective Focal Length), the distance Δs is calculated by EFL × sinθ.

If the galvano scanner unit 32 inclines the laser beam at the angle θ in an opposite direction to a direction shown in Figure 3, the irradiation position of the laser beam onto the sheet metal W can be displaced by the distance Δs in an opposite direction to the direction shown in Figure 3. The distance Δs is a distance less than a radius of the opening 36a, and is preferably a distance less than or equal to a maximum distance when the maximum distance is a distance obtained by subtracting a predetermined margin from the radius of the opening 36a.

The NC device 50 can vibrate the laser beam in a predetermined direction within a surface of the sheet metal W by controlling the drive sections 322 and 324 of the galvano scanner unit 32. By vibrating the laser beam, it is possible to vibrate a beam spot formed on the surface of the sheet metal W. The NC device 50 can displace the laser beam in a predetermined direction within the surface of the sheet metal W by controlling the drive sections 322 and 324 of the galvano scanner unit 32.

The laser machining apparatus 100 configured as above cuts the sheet metal W by the laser beam emitted by the laser oscillator 10 to produce a product having a predetermined shape. The laser machining apparatus 100 locates a focal point of the laser beam in any appropriate position on a top surface of the sheet metal W, and within a thickness of the sheet metal W upward from the top surface by a predetermined distance, or downward from the top surface by a predetermined distance, and cuts the sheet metal while vibrating the laser beam in a predetermined vibration pattern, or cuts the sheet metal by displacing the laser beam.

A machining program for cutting the sheet metal W is stored in the machining program database 60. The NC device 50 reads the machining program from the machining program database 60, and selects any machining condition file among a plurality of machining condition files stored in the machining condition database 70. The NC device 50 controls the laser machining apparatus 100 to cut the sheet metal W based on the read machining program and a machining condition set in the selected machining condition file.

As described later, the laser machining apparatus 100 is configured to be able to set the vibration pattern of the laser beam correspondingly to each of machining conditions set in the machining condition files. The display section 90 displays setting items at a time of setting the vibration pattern of the laser beam correspondingly to each of the machining conditions based on control by the NC device 50.

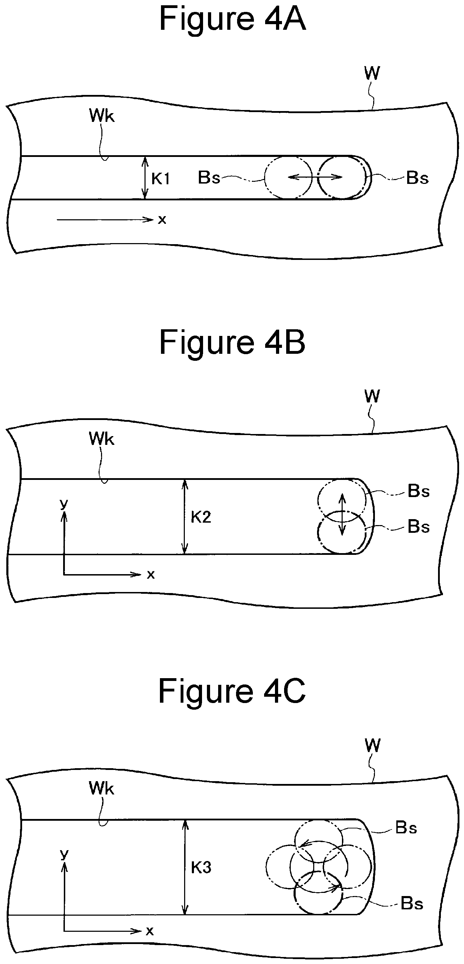

By using Figure 4A to Figure 4E, examples of the vibration pattern in which NC device 50 vibrates the laser beam by the galvano scanner unit 32 will be described. Assume that the cutting advancing direction of the sheet metal W is an x-direction, and a direction orthogonal to the x-direction within the surface of the sheet metal W is a y-direction. The vibration pattern is set to each of the machining conditions of the machining condition files stored in the machining condition database 70, and the NC device 50 controls the galvano scanner unit 32 to vibrate the laser beam in the vibration pattern set in the machining condition.

Figure 4A to Figure 4E illustrate vibration patterns in a state where the machining head 35 is not moved in the x-direction for easy understanding of the vibration patterns. Figure 4A is a vibration pattern for vibrating a beam spot Bs in the x-direction within a groove Wk formed by advancement of the beam spot Bs. The vibration pattern illustrated in Figure 4A is referred to as a parallel vibration pattern. At this time, a kerf width K1 of the groove Wk is substantially a diameter of the beam spot Bs. When a frequency with which the beam spot Bs is vibrated in a parallel direction with the cutting advancing direction is Fx, and a frequency with which the beam spot Bs is vibrated in a direction orthogonal to the cutting advancing direction is Fy, the parallel vibration pattern is a vibration pattern in which Fx . Fy is 1 . 0.

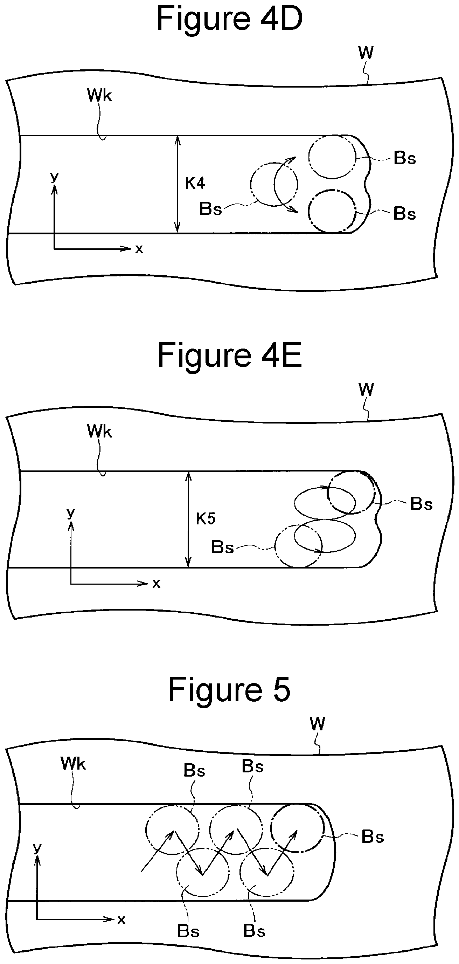

Figure 4B is a vibration pattern in which the beam spot Bs is vibrated in the y-direction. By vibrating the beam spot Bs in the y-direction, the groove Wk has a kerf width K2 that is wider than the kerf width K1. The vibration pattern illustrated in Figure 5 is referred to as an orthogonal vibration pattern. The orthogonal vibration pattern is a vibration pattern in which Fx . Fy is 0 : 1.

Figure 4C is a vibration pattern in which the beam spot Bs is vibrated so that the beam spot Bs draws a circle. By vibrating the beam spot Bs circularly, the groove Wk has a kerf width K3 that is wider than the kerf width K1. The vibration pattern illustrated in Figure 4C is referred to as a circular vibration pattern. The circular vibration pattern is a vibration pattern in which Fx . Fy is 1 . 1.

Figure 4D is a vibration pattern in which the beam spot Bs is vibrated so that the beam spot Bs draws C in the alphabet. By vibrating the beam spot Bs in a C-shape, the groove Wk has a kerf width K4 that is wider than the kerf width K1. The vibration pattern illustrated in Figure 4D is referred to as a C-shaped vibration pattern. The C-shaped vibration pattern is a vibration pattern in which Fx . Fy is 2 . 1 (= 1 . 1/2). Further, Fy has a phase difference 1/2 π (= 90°) from Fx.

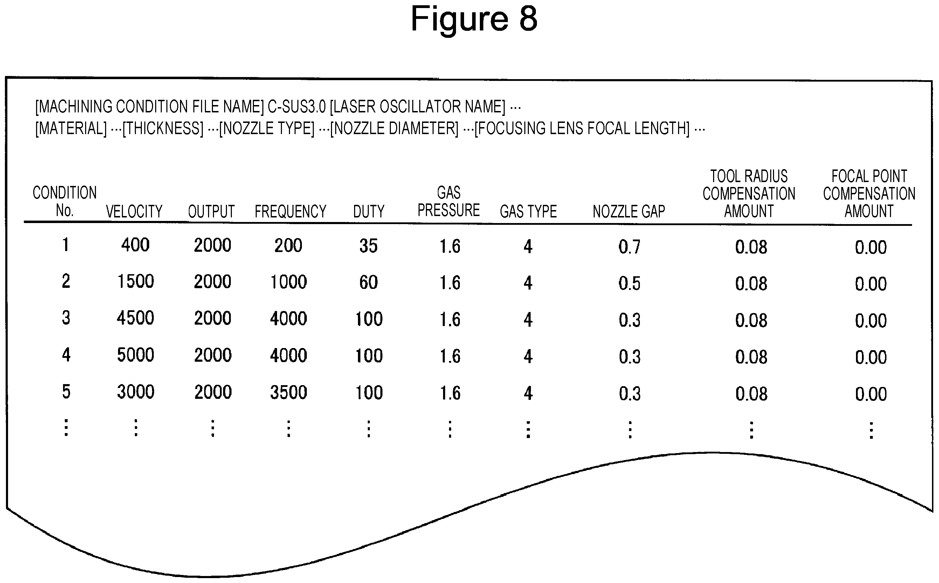

Figure 4E is a vibration pattern in which the beam spot Bs is vibrated so that the beam spot Bs draws the figure 8. By vibrating the beam spot Bs in a shape of 8, the groove Wk has a kerf width K5 that is wider than the kerf width K1. The vibration pattern illustrated in Figure 4E is referred to as an 8-shaped vibration pattern. The 8-shaped vibration pattern is a vibration pattern in which Fx . Fy is 2 . 1.

In reality, the laser beam vibrates while the machining head 35 moves in the cutting advancing direction, so that the vibration patterns are vibration patterns in which displacement in the cutting advancing direction (x-direction) is added to the vibration patterns illustrated in Figure 4A to Figure 4E. Taking the orthogonal vibration pattern illustrated in Figure 4B as an example, the beam spot Bs vibrates in the y-direction while moving in the x-direction, and therefore, an actual orthogonal vibration pattern is a vibration pattern as illustrated in Figure 5.

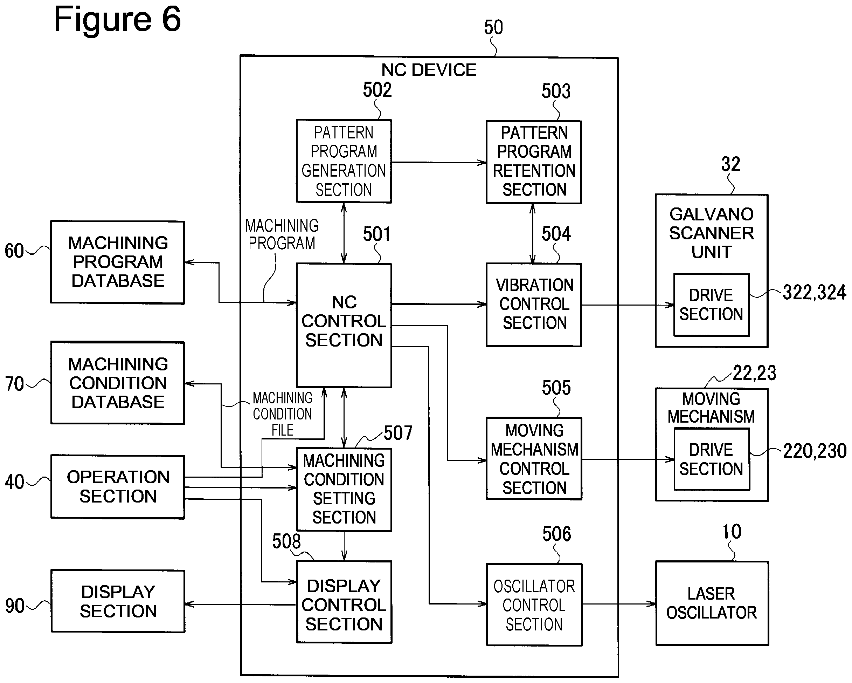

Next, with reference to Figure 6 to Figure 10, how an appropriate vibration pattern is set correspondingly to the machining condition of the sheet metal W will be described. As illustrated in Figure 6, the NC device 50 has an NC control section 501, a pattern program generation section 502, a pattern program retention section 503, a vibration control section 504, a moving mechanism control section 505, an oscillator control section 506, a machining condition setting section 507, and a display control section 508, as a functional configuration.

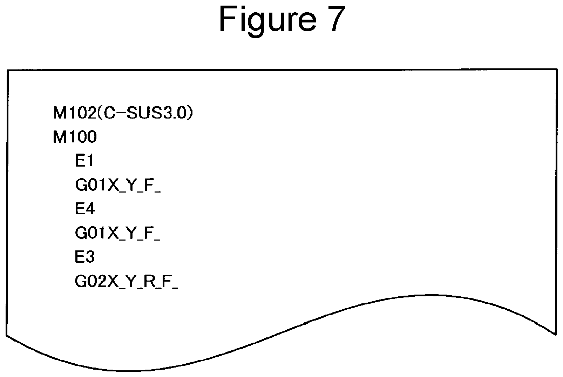

When an instruction to read the machining program is made by the operation section 40, the NC control section 501 reads a machining program that is created in advance to cut the sheet metal W, and is stored in the machining program database 60. The machining program is configured by a plurality of commands expressed by machine control codes as illustrated in Figure 7 as an example.

In Figure 7, M102 is a command to select a machining condition file, and here, instructs to select a machining condition file with a name of C-SUS3.0, as an example. M100 indicates a command to execute laser machining. A number (E number) assigned with E in the alphabet represents a machining condition number described later. A command starting with G01 represents a machining command of linear interpolation that moves the laser beam at a moving velocity F on a straight line connecting a start point and an end point specified by X and Y.

A command starting with G02 represents a machining command of circular interpolation that moves the laser beam at the moving velocity F on a circular arc connecting the start point and the end point. Of a method for identifying a circular arc by specifying a radius of the circular arc, and a method for identifying a circular arc by specifying a center of the circular arc, the former method is shown here.

In the machining condition database 70, a machining condition file with a name of C-SUS3.0 illustrated in Figure 8, and a plurality of other machining condition files are stored. The machining condition file illustrated in Figure 8 shows a state where a parameter described later for determining the vibration pattern is not added. The parameter is an element for determining a specific way of vibration by the vibration pattern. First, an outline of the machining condition file in the state where the parameter for determining the vibration pattern is not added is as follows.

As illustrated in Figure 8, the machining condition file includes a name of the laser oscillator 10, quality and the thickness of the sheet metal W, a nozzle type that is a type of the nozzle 36, a nozzle diameter that is a diameter of the opening 36a, and information on the focal length of the focusing lens 34. These kinds of information indicate conditions that are commonly applied regardless of the machining condition with which machining condition number set in the machining condition file is selected. The machining condition file may include the other kinds of information not illustrated in Figure 8.

In the machining condition file, various conditions at a time of machining the sheet metal W are set in response to the plurality of machining condition numbers. The machining condition numbers correspond to numbers (E numbers) to which E in the alphabet is assigned in the machining program illustrated in Figure 7. In Figure 8, a velocity indicates a machining velocity (velocity data) of the sheet metal W that is a moving velocity of the machining head 35. An output, a frequency and a duty respectively represent a laser output (laser power) of the laser oscillator 10, a frequency, and a duty, at a time of pulse oscillation. A gas pressure and a gas type respectively represent a gas pressure and a gas type of the assist gas supplied by the assist gas supply device 80.

A nozzle gap represents a distance from a tip end of the nozzle 36 to the top surface of the sheet metal W. A tool radius compensation amount represents a distance by which the laser beam is displaced from an end portion when scanning the laser beam along the end portion of a product. The tool radius compensation amount is a distance corresponding to a radius of the beam spot Bs. A focal point compensation amount represents a distance by which a focal point of the laser beam is displaced upward or downward from a position (0.00) that is a reference. Other conditions not illustrated in Figure 8 may be set correspondingly to the respective machining condition numbers.

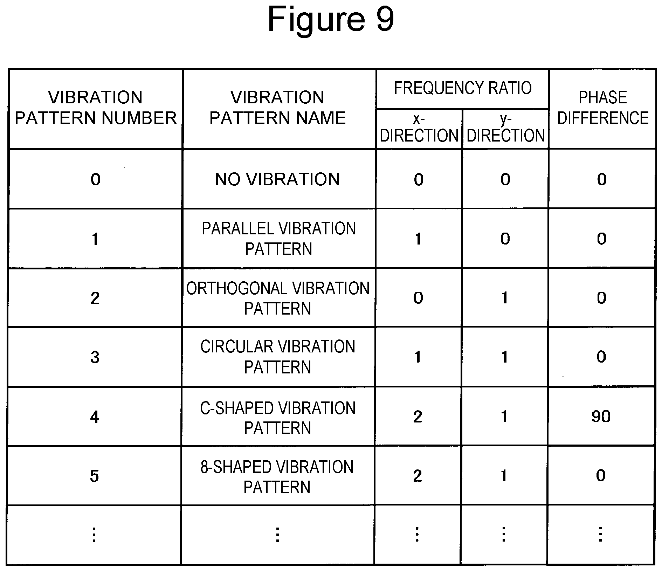

As illustrated in Figure 9, in the machining condition database 70, first parameters for determining respective vibration patterns are stored correspondingly to vibration pattern numbers for selecting the respective vibration patterns. The vibration pattern number is pattern selection information for selecting the vibration pattern of the laser beam. The first parameter is a parameter for determining a shape of each of the vibration patterns. Here, for easy understanding, vibration pattern names are shown correspondingly to the respective vibration pattern numbers, but the vibration pattern names do not have to be stored in the machining condition database 70.

In the machining condition database 70, a frequency ratio between a frequency for vibrating the laser beam in the x-direction and a frequency for vibrating the laser beam in the y-direction, and a phase difference between the vibration in the x-direction and vibration in the y-direction are set correspondingly to each of the vibration pattern numbers, as the first parameter.

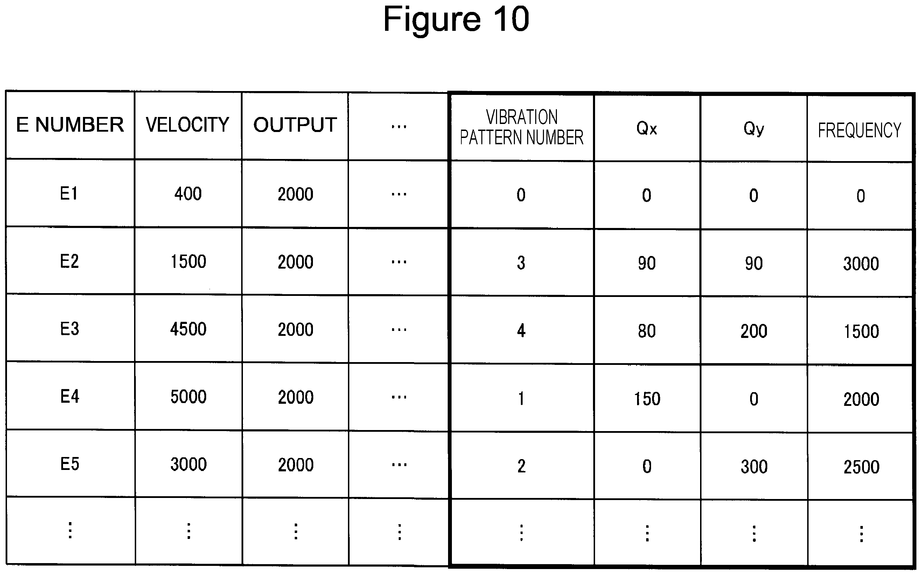

When an operation of setting the parameters for determining the vibration pattern is performed by the operation section 40, the machining condition setting section 507 controls the display control section 508 to display a setting list as illustrated in Figure 10 on the display section 90. As illustrated in Figure 10, the setting list is a list for selecting the vibration pattern number correspondingly to each of the E numbers, and setting a second parameter for determining the vibration pattern of each of the vibration pattern numbers for each of the vibration pattern numbers. The second parameter is a parameter for determining an amplitude and a frequency of each of the vibration patterns which have shapes determined by the first parameters.

In Figure 10, Qx represents a set value for setting an amplitude in the x-direction, and Qy represents a set value for setting an amplitude in the y-direction. For example, in a machining condition of E number E2, a circular vibration pattern of an amplitude in the x-direction of 90 (µm), an amplitude in the y-direction of 90 (µm), and a frequency of 3000 (Hz) is set.

All kinds of information corresponding to the machining condition numbers of the machining condition file illustrated in Figure 8 do not have to be displayed in the setting list. Only the E numbers may be displayed in the setting list, and the vibration pattern numbers and the second parameters may be associated with the E numbers.

A setter or a serviceman of a manufacturer of the laser machining apparatus 100 can set the vibration pattern number and the second parameter by displaying the setting list illustrated in Figure 10 on the display section 90 by operating the operation section 40. It is preferable that a user of the laser machining apparatus 100 cannot perform an operation of displaying set items encircled by a thick solid line on the display section 90 and cannot see the set items encircled by the thick solid line. It is preferable that the list of the machining condition except for the set items encircled by the thick solid line is set to be displayed when the user operates the operation section 40 to display the list of the E number on the display section 90.

The machining condition file to which the vibration pattern number and the second parameter for determining the vibration pattern are added as above is written to the machining condition database 70. The machining condition database 70 is an example of a storage section that stores the machining condition file to which the vibration pattern number and the second parameter are added. The machining condition file may be stored in another storage section connected to the NC device 50.

When the machining program illustrated in Figure 7 is supplied to the NC control section 501, the information in which the first parameter is associated with each of the vibration pattern numbers illustrated in Figure 9, and the machining condition file of the name C-SUS3.0 are read from the machining condition database 70. The vibration pattern number and the second parameter are added to the machining condition file. The information and machining condition file illustrated in Figure 9 are supplied to the NC control section 501 from the machining condition setting section 507.

The pattern program generation section 502 generates a pattern program for vibrating the laser beam in the vibration patterns corresponding to all the E numbers included in the machining program read by the NC control section 501. The pattern program is a control code for operating the galvano scanner unit 32, and is a program in which a command (process) to a computer is described. The pattern program generation section 502 can generate the pattern program based on the first and second parameters supplied to the NC control section 501. The pattern program generated by the pattern program generation section 502 is supplied to and retained in the pattern program retention section 503.

After being instructed to execute laser machining by the machining program, the NC control section 501 supplies the vibration pattern number to the vibration control section 504 for each E number. The NC control section 501 extracts information on the focal length of the focusing lens 34 necessary to determine the vibration pattern out of the information included in the machining condition file to supply the information on the focal length of the focusing lens 34 to the vibration control section 504. The NC control section 501 preferably extracts the information on the focal point compensation amount in addition to the information on the focal length and supplies the information on the focal point compensation amount to the vibration control section 504. Though not illustrated in Figure 6, in order to adjust the focal point position of the laser beam, the information on the focal point compensation amount is also used to control the drive section of the focusing lens 34. Further the NC control section 501 supplies the vector information for moving the laser beam to the vibration control section 504, based on the machining command that starts with G01, G02 or the like and moves the laser beam.

The vibration control section 504 reads the pattern program corresponding to the vibration pattern number from the pattern program retention section 503. The vibration control section 504 controls the drive sections 322 and 324 of the galvano scanner unit 32 to vibrate the laser beam in the selected vibration pattern and the set condition based on the pattern program, the vector information, the focal length of the focusing lens 34 and the focal point compensation amount.

By the machining program or the machining condition file, or manual setting by the operation section 40, an offset value showing a distance by which the laser beam emitted from the opening 36a of the nozzle 36 to at least one of the x-direction and the y-direction from the center of the opening 36a may be set. In this case, the NC control section 501 supplies offset values in the x-direction and the y-direction to the vibration control section 504.

A moving mechanism formed by the X-axis carriage 22 and the Y-axis carriage 23 (hereinafter, the moving mechanisms 22 and 23) has drive sections 220 and 230 that respectively drive the moving mechanisms 22 and 23. The moving mechanism control section 505 controls the drive sections 220 and 230 based on the machining command that moves the laser beam, and moves the machining head 35. The moving mechanism control section 505 controls the drive sections 220 and 230 every 1 ms, for example, and moves the machining head 35. Consequently, the cutting advancing direction in which the laser beam cuts the sheet metal W is controlled with a control period of 1 ms (first control period).

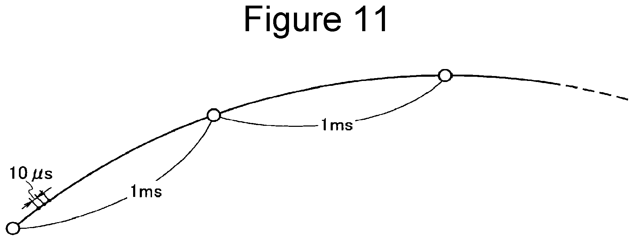

The vibration control section 504 can control the drive sections 322 and 324 with a control period shorter than 1 ms, and control the vibration of the laser beam with a control period shorter than 1 ms. Figure 11 conceptually illustrates a state where the moving mechanism control section 505 moves the machining head 35 (laser beam) in a circular-arc shape with a control period of 1 ms, based on a machining command starting with G02 (or G03). The vibration control section 504 controls the vibration of the laser beam with a control period (second control period) of 10 µs obtained by multiplying 1/100 by 1 ms, for example. In this way, it is possible to vibrate the laser beam with high precision in the pattern set in each of the vibration patterns every 10 µs.

Note that due to the convenience of the NC device 50, and motor amplifiers or motors of the moving mechanisms 22 and 23, the periods in the first control period and the second control period can be arbitrarily set. Further, in order to further fractionize the first control period, it is also possible to set another control period between the first control period and the second control period.

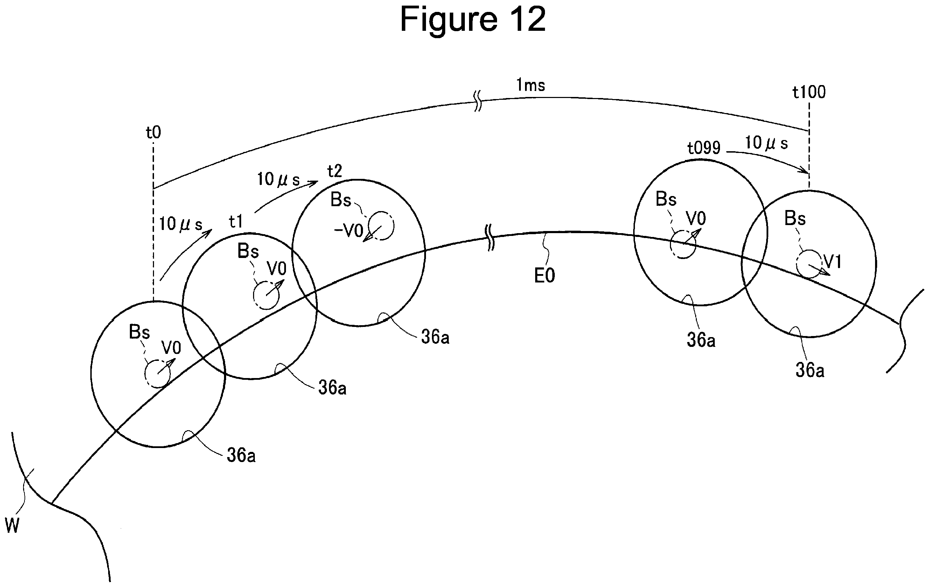

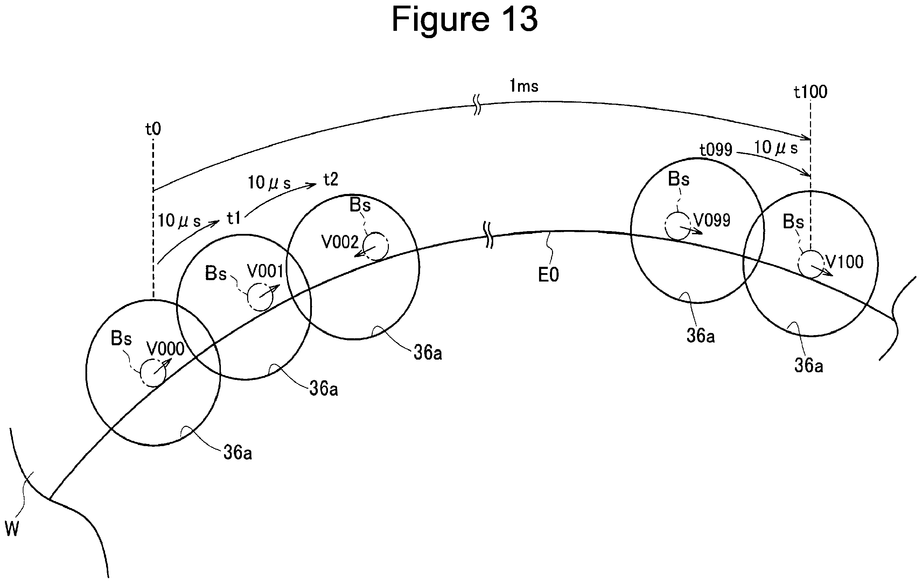

By using Figure 12 and Figure 13, an operational effect by the vibration control section 504 controlling the vibration of the laser beam with the second control period shorter than the first control period by the moving mechanism control section 505 will be specifically described. Figure 12 is a comparative example, and conceptually illustrates an operation in a case where the vibration control section 504 controls the vibration of the laser beam with the first control period. Figure 13 conceptually illustrates an operation in a case where the vibration control section 504 controls the vibration of the laser beam with the second control period.

Figure 12 illustrates a case where the moving mechanism control section 505 moves the machining head 35 along an end portion E0 in a circular-arc shape of a product. Assume that times t0 to t100 are 1 ms. Figure 12 illustrates a case where the vibration control section 504 controls the galvano scanner unit 32 to vibrate the laser beam in the parallel vibration pattern illustrated in Figure 4A. As an example, at the time t0, the beam spot Bs is located in a center of the opening 36a, and the vibration control section 504 displaces the beam spot Bs in the x-direction over a time period of 20 µs until a time t2, and an amplitude reaches a maximum amplitude in the x-direction at the time t2.

The vibration control section 504 is supplied with vector information that the moving mechanism control section 505 moves the machining head 35 from the time t0 onward, before the time t0. The vibration control section 504 determines a vector that displaces the beam spot Bs in the x-direction at the time t0 as a vector V0. The vector V0 is a vector in a tangent direction of the end portion E0 at the time t0. The vibration control section 504 displaces the laser beam with the vector V0 at the time t0.

When the vibration control section 504 controls vibration of the laser beam with the first control period, the vibration control section 504 also displaces the laser beam with the vector V0 at the time t1, and displaces the laser beam with a vector -V0 that is in a -x-direction at the time t2. Likewise, the vibration control section 504 displaces the laser beam with the vector V0 at a time t099.

The vibration control section 504 is supplied with vector information that the moving mechanism control section 505 moves the machining head 35 from a time t100 onward, before the time t100. The vibration control section 504 determines a vector that displaces the beam spot Bs in the x-direction at the time t100 as a vector V1. The vector V1 is a vector in a tangent direction of the end portion E0 at the time t100. The vibration control section 504 displaces the laser beam with the vector V1 at the time t100.

In this way, when the vibration control section 504 controls the vibration of the laser beam with the first control period, the vibration control section 504 vibrates the laser beam by the single vectors in the x-direction and the -x-direction that are inverted from each other, during the entire time period of the first control period. The vector that vibrates the laser beam is updated only every 1 ms. Therefore, the laser machining apparatus 100 cannot cut the end portion E0 of the product with high precision.

In relation to this, when the vibration control section 504 controls the vibration of the laser beam with the second control period, the vibration control section 504 determines vectors that displace the beam spot Bs in the x-direction at times t0 and t1 respectively as vectors V000 and V001, as illustrated in Figure 13. The vector V000 is a vector in a tangent direction of the end portion E0 at the time t0, and the vector V001 is a vector in a tangent direction of the end portion E0 at the time t1. The vector V001 is determined as the vector that displaces the beam spot Bs in the x-direction based on vector information at a time point of the time t1, and therefore is a vector different from the vector V000.

The vibration control section 504 determines a vector that displaces the beam spot Bs in the -x-direction at a time t2 as a vector V002. The vector V002 is also determined as the vector that displaces the beam spot Bs in the -x-direction based on vector information at a time point of the time t2, and therefore is not a vector that is obtained by inverting the vector V000 or V001. The vibration control section 504 displaces the laser beam with vectors V000 to V099 that are changed every 10 µs at times t0 to t100.

The vibration control section 504 determines the vector that displaces the beam spot Bs in the x-direction at the time t100 as a vector V100. The vector V100 is a vector in a tangent direction of the end portion E0 at the time t100. Thereafter, the vibration control section 504 similarly displaces the laser beam with a vector that is changed every 10 µs.

In this way, the vibration control section 504 determines the vector that defines the direction of the vibration for vibrating the laser beam in the predetermined vibration pattern with the second control period. The vibration control section 504 controls the galvano scanner unit 32 to vibrate the laser beam in the predetermined vibration pattern based on the vector determined with the second control period. Consequently, the laser machining apparatus 100 can cut the end portion E of the product with high precision while vibrating the laser beam in the predetermined pattern.

As illustrated in Figure 13, when the laser beam is vibrated in the parallel vibration pattern that repeats a vibration to a front side in the cutting advancing direction of the sheet metal W and a vibration to a rear side, the vibration control section 504 determines the vector specifically as follows. The vibration control section 504 determines a vector that moves the laser beam to a position along the end portion E0 of the product to be cut to produce the product having a predetermined shape by cutting the sheet metal W, as the vector that defines a direction of the vibration at a time of vibrating the laser beam to the front side.

Preferably, the vibration control section 504 determines a vector that moves the laser beam to a position (that is, on a cutting trajectory) along the cut end portion E0 of the product, as a vector that defines the direction of the vibration at a time of vibrating the laser beam to the rear side.

The vibration control section 504 determines the vector that moves the laser beam along the end portion E0 of the product at least when vibrating the laser beam to the front side, and preferably when vibrating the laser beam to the front side and to the rear side. Thereby, the laser machining apparatus 100 can cut the end portion E0 of the product with high precision, while vibrating the laser beam in the parallel vibration pattern.

In the present embodiment, the vector with which the vibration control section 504 moves the laser beam to the position along the end portion E0 of the product is a linear vector in the tangent direction of the end portion E0 at each time point in the second control period. Even with the linear vector, it is possible to cut the sheet metal W along substantially the end portion E0 of the product. Control of displacement of the laser beam by the vibration control section 504 becomes easier with the linear vector.

In order to cut the sheet metal W along the end portion E0 of the product more precisely, the vector that moves the laser beam may be a curvilinear vector to be along the end portion E0 of the product. When the end portion E0 is a circular arc as illustrated in Figure 13, the vector is preferably in a fine circular arc shape in order to cut the sheet metal W precisely along the end portion E0 of the product.

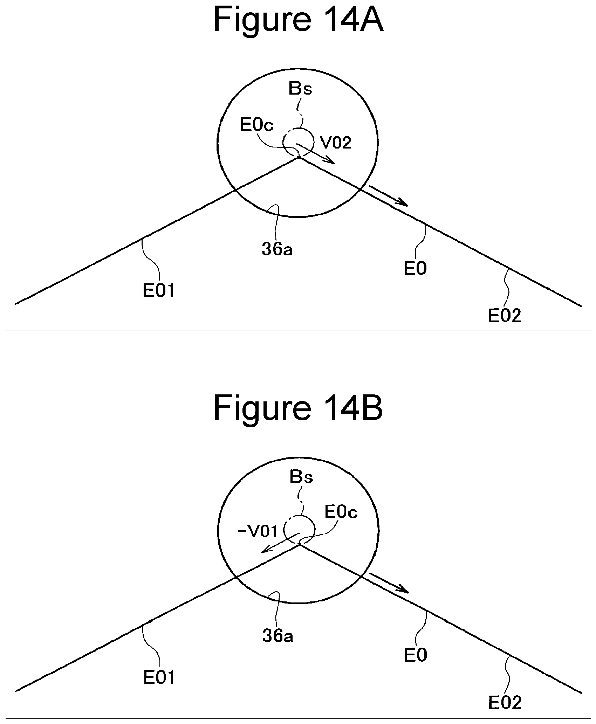

Figure 13 illustrates a case where the laser machining apparatus 100 cuts the sheet metal W along the end portion E0 in the circular arc shape of the product, but control is similarly performed when the laser machining apparatus 100 cuts the sheet metal W along the end portion E0 of the product having shapes as illustrated in Figure 14A and Figure 14B. The laser machining apparatus 100 cuts the sheet metal W to a corner E0c that is a connection point of an end portion E01 and an end portion E02 along the end portion E01 of the product. Subsequently, the laser machining apparatus 100 cuts the sheet metal W along the end portion E02 from the corner E0c. In Figure 14A and Figure 14B, arrows shown by thick solid lines show moving directions of the machining head 35 (nozzle 36).

When the beam spot Bs is located at the corner E0c, and the laser beam is vibrated to the front side as illustrated in Figure 14A, the vibration control section 504 can displace the laser beam by a vector V02 along the end portion E02. When the beam spot Bs is located at the corner E0c, and the laser beam is vibrated to the rear side as illustrated in Figure 14B, the vibration control section 504 can displace the laser beam by a vector -V01 along the end portion E01 instead of a vector obtained by inverting the vector V02.

The laser machining apparatus 100 can cut the end portion E0 of the product with high precision whatever the shape of the product.

Next, an operation in a case where the galvano scanner unit 32 is caused to function as the beam displacement mechanism, and the laser machining apparatus 100 cuts the sheet metal by displacing the laser beam to the front side in the cutting advancing direction from the center of the opening 36a of the nozzle 36 to produce the product will be described.

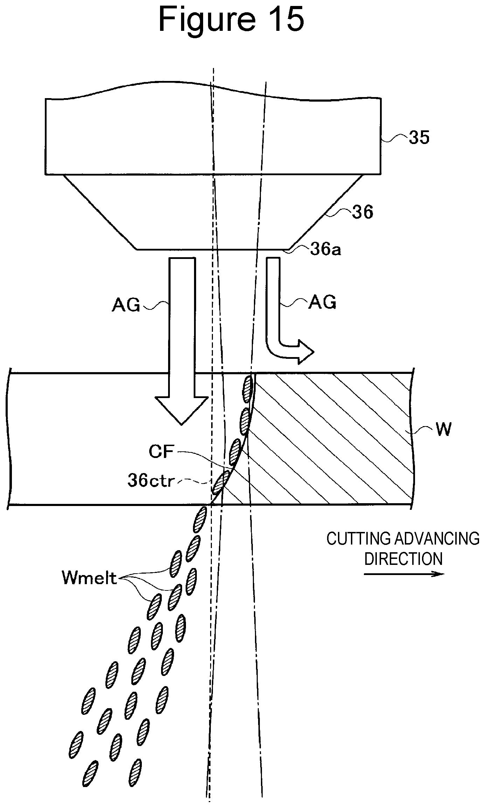

As illustrated in Figure 15, the NC device 50 displaces the laser beam to the front side in the cutting advancing direction from a center 36ctr of the opening 36a by the galvano scanner unit 32. The NC device 50 cuts the sheet metal W by moving a relative position of the machining head 35 by the moving mechanism in a state where the laser beam is displaced to the front side in the cutting advancing direction.

Figure 15 illustrates a state of cutting the sheet metal W in a defocused state where a position of a beam waist (focused point of the laser beam) is located downward from the surface of the sheet metal W. In Figure 15, the beam waist is located at a center in a thickness direction of the sheet metal W or in a vicinity of the center. The NC device 50 preferably adjusts a position in an optical axis direction of the focusing lens 34 so that the beam waist is located at the center or in the vicinity of the center in the thickness direction of the sheet metal W, or downward from the surface of the sheet metal W and upward from the center in the thickness direction.

Further, as illustrated in Figure 15, the NC device 50 can locate the machining head 35 so that the center 36ctr of the opening 36a is located at a lower side from the center in the thickness direction of the sheet metal W in a cutting front CF.

Note that when machining the sheet metal W by using oxygen as the assist gas, the position in the optical axis direction of the focusing lens 34 may be adjusted so that the beam waist is located on the surface of the sheet metal W or upward from the surface.

In Figure 15, assist gas AG that is supplied to the machining head 35 by the assist gas supply device 80 is blown to the sheet metal W through the opening 36a. When the laser beam is displaced to the front side in the cutting advancing direction, it is possible to increase an amount of the assist gas AG acting on molten metal Wmelt generated at the rear side in the cutting advancing direction. In other words, it is possible to improve discharge performance of the molten metal Wmelt by setting a vicinity of the center of the cutting front CF where much molten metal Wmelt exists directly under the center position of the nozzle 36 where a flow velocity of the assist gas AG is fast, and therefore it is possible to reduce occurrence of machining defect.

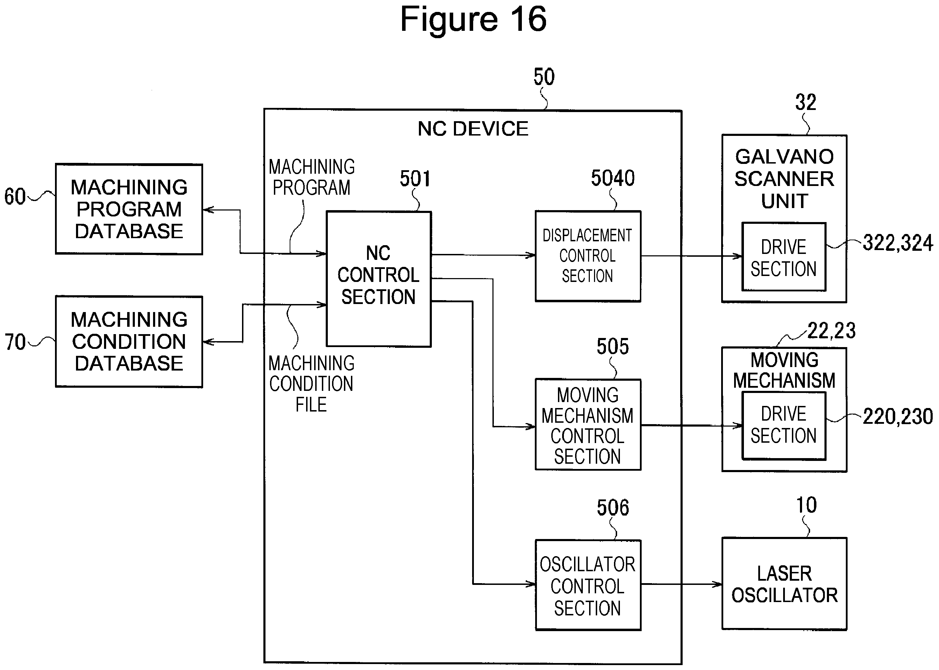

When the galvano scanner unit 32 is caused to function as a beam displacement mechanism, the NC device 50 can be configured as illustrated in Figure 16. By using Figure 16, a functional configuration example of the NC device 50 and an operation thereof will be described, which is not covered by the present invention. In Figure 16, in the machining program database 60, a machining program for cutting the sheet metal W is stored. In the machining condition database 70, a plurality of machining condition files in which various machining conditions at a time of cutting the sheet metal W are stored.

The NC device 50 reads the machining program from the machining program database 60, and selects any machining condition file of the plurality of machining condition files stored in the machining condition database 70. The NC device 50 controls the laser machining apparatus 100 to cut the sheet metal W based on the machining program which is read and the machining condition set in the machining condition file which is selected.

The NC device 50 has the NC control section 501, a displacement control section 5040, the moving mechanism control section 505, and the oscillator control section 506, as a functional configuration. The NC control section 501 controls the displacement control section 5040, the moving mechanism control section 505, and the oscillator control section 506, based on the machining program and the machining condition set in the machining condition file.

Vector information at the time of the moving mechanism control section 505 moving the machining head 35 according to the machining program is supplied to the displacement control section 5040. The displacement control section 5040 controls the drive sections 322 and 324 of the galvano scanner unit 32 to displace the laser beam to the front side in the cutting advancing direction from the center 36ctr of the opening 36a based on the vector information.

The moving mechanism (hereinafter, the moving mechanisms 22 and 23) formed by the X-axis carriage 22 and the Y-axis carriage 23 has the drive sections 220 and 230 that respectively drive the moving mechanisms 22 and 23. The moving mechanism control section 505 controls the drive sections 220 and 230 to move the machining head 35. The oscillator control section 506 controls the laser oscillator 10 based on the machining condition.

The moving mechanism control section 505 moves the machining head 35 by controlling the drive sections 220 and 230 every 1 ms, for example. Accordingly, the cutting advancing direction in which the laser beam cuts the sheet metal W is controlled with a control period of 1 ms (first control period). The displacement control section 5040 can control the drive sections 322 and 324 with a control period shorter than 1 ms, and control the vibration of the laser beam with the control period shorter than 1 ms. The displacement control section 5040 controls displacement of the laser beam with a control period (second control period) of 10 µs obtained by multiplying 1/100 by 1 ms, for example.

Note that the NC control section 501 may collectively supply a plurality of commands in a unit of 1 ms described above to the moving mechanism control section 505 and the displacement control section 5040. In this case, the displacement control section 5040 may simultaneously determine a direction in which the laser beam is displaced with the control period of 10 µs in a next 1 ms, and a direction in which the laser beam is displaced with the control period of 10 µs at least in a subsequent 1 ms to the next 1 ms.

Figure 11 described above conceptually illustrates the state where the moving mechanism control section 505 moves the machining head 35 (laser beam) with a control period of 1 ms in a circular arc shape. The displacement control section 5040 can displace the laser beam with high precision by controlling the displacement of the laser beam to the front side in the cutting advancing direction every 10 µs.

Note that due to convenience of the NC device 50, the motor amplifiers or the motors of the moving mechanisms 22 and 23, the periods in the first control period and the second control period can be arbitrarily set. Further, in order to further fractionize the first control period, it is also possible to set another control period between the first control period and the second control period.

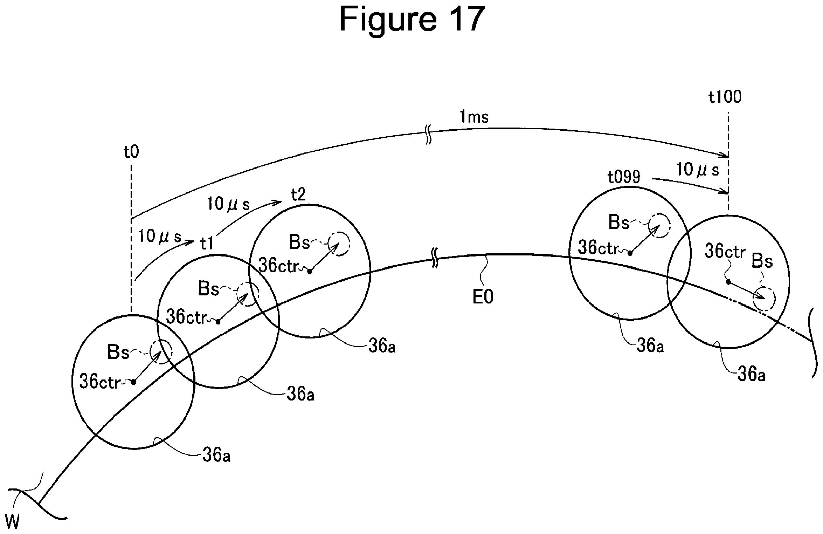

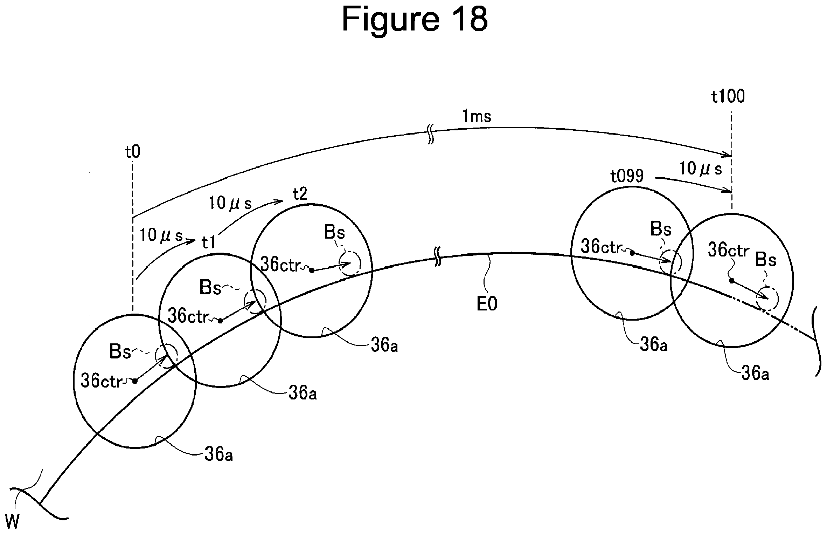

An operational effect by the displacement control section 5040 controlling the displacement of the laser beam at the second period which is shorter than the first control period by the moving mechanism control section 505 will be specifically described by using Figure 17 and Figure 18. Figure 17 is a comparative example, and conceptually illustrates an operation in a case where the displacement control section 5040 controls the displacement of the laser beam with the first control period. Figure 18 conceptually illustrates an operation in a case where the displacement control section 5040 controls the displacement of the laser beam with the second control period.

Figure 17 illustrates a case where the moving mechanism control section 505 moves the machining head 35 along the end portion E0 in the circular arc shape of the product. Assume that times t0 to t100 are 1 ms. In Figure 17 and Figure 18, centers 36ctr of the openings 36a are shown by black circles, and directions in which the laser beam (beam spot Bs) is displaced are shown by arrows from the black circles.

The displacement control section 5040 is supplied with vector information that the moving mechanism control section 505 moves the machining head 35 from a time t0 onward, before the time t0. The displacement control section 5040 determines a direction to displace the beam spot Bs to the front side in the cutting advancing direction at the time t0. The front side in the cutting advancing direction at the time t0 is a front side when a tangent direction of the end portion E0 at the time t0 is the cutting advancing direction. When the displacement control section 5040 controls displacement of the beam spot Bs with the first control period, the displacement control section 5040 displaces the beam spot Bs in a same direction at all times of times t0 to t099.

The displacement control section 5040 is supplied with vector information that the moving mechanism control section 505 moves the machining head 35 from a time t100 onward, before the time t100. The displacement control section 5040 determines a direction to displace the beam spot Bs to the front side in the cutting advancing direction at the time t100.

When the displacement control section 5040 controls displacement of the laser beam with the first control period in this way, the displacement control section 5040 displaces the laser beam in the same direction during an entire time period of the first control period. The direction to displace the laser beam is updated only every 1 ms. Accordingly, when the end portion E0 of the product is in a curvilinear shape like a circular arc, for example, the laser machining apparatus 100 cannot cut the end portion E0 with high precision.

In relation with this, if the displacement control section 5040 controls the displacement of the laser beam with the second control period, the displacement control section 5040 can determine the direction to displace the laser beam to the front side in the cutting advancing direction based on the vector information at each of time points of the times t0 to t099. The front side in the cutting advancing direction at the times t0 to t099 is a front side at a time of the tangent direction of the end portion E0 at each of the time points is the cutting advancing direction.

Accordingly, as illustrated in Figure 18, the displacement control section 5040 can displace the laser beam to the front side in an optimal direction in the cutting advancing direction at each of the time points of the times t0 to t099. The displacement control section 5040 can also similarly displace the laser beam to the front side in an optimal direction in the cutting advancing direction every 10 µs, from the time t100 onward.

Accordingly, even if an end portion of a product is in a curvilinear shape, the laser machining apparatus 100 can displace the laser beam to the front side in the cutting advancing direction from the center of the opening 36a of the nozzle 36 and cut the sheet metal W with high precision along the end portion of the product.

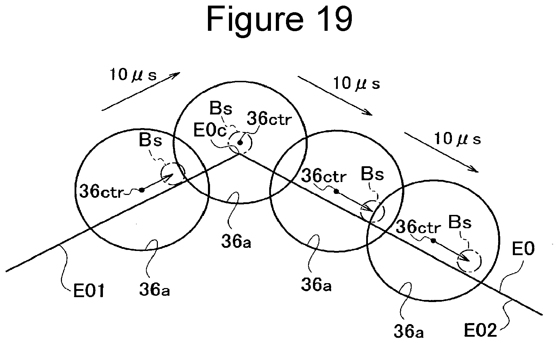

When the sheet metal W is cut along the end portion E0 of the product having a shape as illustrated in Figure 19, the displacement control section 5040 can control the galvano scanner unit 32 to displace the laser beam as follows. The laser machining apparatus 100 cuts the sheet metal W to a corner E0c that is a connection point of an end portion E01 and an end portion E02 along the end portion E01 of the product. Subsequently, the laser machining apparatus 100 cuts the sheet metal W along the end portion E02 of the product from the corner E0c.

At a time point when the machining head 35 (nozzle 36) cuts the sheet metal W along the end portion E01 and reaches the corner E0c, the displacement control section 5040 locates the beam spot Bs at a center 36ctr with a displacement amount to the front side in the cutting advancing direction of the laser beam as zero. The beam spot Bs is adjacent to the corner E0c. Accordingly, the laser machining apparatus 100 can cut the sheet metal W along the end portion E0 (E01 and E02) of the product in the shape having the corner E0c.

The present invention is not limited to the one or more embodiments described above, and can be variously modified in the range without departing from the scope of the present invention as defined in the appended claims.

When the NC device 50 switches the operation of vibrating the laser beam and the operation of displacing the laser beam, a vibration/displacement control section that functions as the vibration control section 504 or the displacement control section 5040 can be included. The vibration/displacement control section may function as only the vibration control section 504, or may function as only the displacement control section 5040. The functional configuration in the NC device 50 illustrated in Figure 6 or Figure 16 may be realized by the central processing unit in the NC device 50 executing a computer program stored in a non-transitory storage medium.

The disclosure of the present application relates to the subjects described in Japanese Patent Application No. 2018-198280 filed on October 22, 2018, Japanese Patent Application No. 2018-232271 filed on December 12, 2018, and Japanese Patent Application No. 2019-000062 filed on January 4, 2019.

## Claims

1. A laser machining apparatus (100), comprising:
a laser oscillator (10) configured to generate and emit a laser beam;
a moving mechanism (22, 23) configured to relatively move a machining head (35) that emits a laser beam from an opening (36a) of a nozzle (36) with respect to a sheet metal (W) along a surface of the sheet metal (W) to produce a product having a predetermined shape, in which an end portion of the product to be cut to produce the product is in a curvilinear shape, by cutting the sheet metal (W);
a beam vibration mechanism (32) configured to vibrate the laser beam with which the sheet metal (W) is irradiated to produce the product while relatively moving the machining head (35) by the moving mechanism (22, 23);
a moving mechanism control section (505) configured to control the moving mechanism (22, 23) to relatively move the machining head (35) with a first control period; and
a vibration control section (504) configured to control the beam vibration mechanism (32) to vibrate the laser beam with a second control period shorter than the first control period,
wherein the vibration control section (504) is configured to
determine a vector that defines a direction of vibration for vibrating the laser beam in a predetermined vibration pattern with the second control period, and
control the beam vibration mechanism (32) to vibrate the laser beam in the predetermined vibration pattern based on the determined vector with the second control period, **characterized in that** the vibration control section (504) is configured to
control the beam vibration mechanism (32) to vibrate the laser beam in a parallel vibration pattern that repeats vibration to a front side in a cutting advancing direction of the sheet metal (W) by the laser beam and vibration to a rear side, and
determine the vector that moves the laser beam to a position along the end portion of the product as the vector that defines the direction of the vibration at a time of vibrating the laser beam to the front side.

2. The laser machining apparatus (100) according to claim 1,
wherein the vibration control section (504) is configured to determine the vector that moves the laser beam to the position along the cut end portion of the product as the vector that defines the direction of the vibration at a time of vibrating the laser beam to the rear side.

3. A laser machining method, comprising:
relatively moving, by a moving mechanism (22, 23), a machining head (35) that emits a laser beam from an opening (36a) of a nozzle (36) with respect to a sheet metal (W) along a surface of the sheet metal (W) to produce a product having a predetermined shape, in which an end portion of the product to be cut to produce the product is in a curvilinear shape, by cutting the sheet metal (W);
vibrating, by a beam vibration mechanism (32), the laser beam with which the sheet metal (W) is irradiated to produce the product while relatively moving the machining head (35) by the moving mechanism (22, 23);
controlling, by a moving mechanism control section (505), the moving mechanism (22, 23) to relatively move the machining head (35) with a first control period; and
controlling, by a vibration control section (504), the beam vibration mechanism (32) to vibrate the laser beam with a second control period shorter than the first control period,
further comprising, by the vibration control section (504):
determining a vector that defines a direction of vibration for vibrating the laser beam in a predetermined vibration pattern with the second control period; and
controlling the beam vibration mechanism (32) to vibrate the laser beam in the predetermined vibration pattern based on the determined vector with the second control period,
**characterized by,** by the vibration control section (504):
controlling the beam vibration mechanism (32) to vibrate the laser beam in a parallel vibration pattern that repeats vibration to a front side in a cutting advancing direction of the sheet metal (W) by the laser beam and vibration to a rear side; and
determining the vector that moves the laser beam to a position along the end portion of the product, as the vector that defines a direction of the vibration at a time of vibrating the laser beam to the front side.

4. The laser machining method according to claim 3, further comprising, by the vibration control section (504), determining the vector that moves the laser beam to the position along the cut end portion of the product, as a vector that defines the direction of the vibration at a time of vibrating the laser beam to the rear side.

## Patentansprüche

1. Laserbearbeitungsvorrichtung (100), umfassend:
einen Laseroszillator (10), der konfiguriert ist, einen Laserstrahl zu erzeugen und auszustrahlen;
einen Bewegungsmechanismus (22, 23), der konfiguriert ist, einen Bearbeitungskopf (35), der einen Laserstrahl aus einer Öffnung (36a) einer Düse (36) ausstrahlt, relativ entlang einer Oberfläche des Metallblechs (W) zu bewegen, um ein Produkt, das eine festgelegte Form aufweist, wobei ein Endabschnitt des Produkts, der zu schneiden ist, um das Produkt herzustellen, eine kurvenförmige Form aufweist, durch Schneiden des Metallblechs (wie) herzustellen;
einen Strahlschwingungsmechanismus (32), der konfiguriert ist, den Laserstrahl zu schwingen, mit welchem das Metallblech (W) bestrahlt wird, um das Produkt zu produzieren, während der Bearbeitungskopf (35) durch den Bewegungsmechanismus (22, 23) relativ bewegt wird;
einen Bewegungsmechanismus-Steuerungsabschnitt (505), der konfiguriert ist, den Bewegungsmechanismus (22, 23) zu steuern, um den Bearbeitungskopf (35) relativ zu bewegen, mit einem ersten Steuerintervall; und
einen Schwingungssteuerungsabschnitt (504), der konfiguriert ist, den Strahlschwingungsmechanismus (32) zu steuern, um den Laserstrahl zu schwingen, mit einem zweiten Steuerintervall, das kürzer als das erste Steuerintervall ist,
wobei der Schwingungssteuerungsabschnitt (504) konfiguriert ist, um einen Vektor zu bestimmen, der eine Schwingungsrichtung definiert, um den Laserstrahl in einem festgelegten Schwingungsmuster mit dem zweiten Steuerintervall zu schwingen, und
den Strahlschwingungsmechanismus (32) zu steuern, um den Laserstrahl in dem festgelegten Schwingungsmuster basierend auf dem bestimmten Vektor mit dem zweiten Steuerintervall zu schwingen,
**dadurch gekennzeichnet, dass** der Schwingungssteuerungsabschnitt (504) konfiguriert ist, um
den Strahlschwingungsmechanismus (32) zu steuern, um den Laserstrahl in einem parallelen Schwingungsmuster zu schwingen, das eine Schwingung zu einer Vorderseite in einer Schneidvorschubrichtung des Metallblechs (W) durch den Laserstrahl und eine Schwingung zu einer Rückseite wiederholt, und
den Vektor, der den Laserstrahl zu einer Position entlang des Endabschnitts des Produkts bewegt, als den Vektor zu bestimmen, der die Richtung der Schwingung zu dem Zeitpunkt der Schwingung des Laserstrahls zu der Vorderseite definiert.

2. Die Laserbearbeitungsvorrichtung (100) nach Anspruch 1,
wobei der Schwingungssteuerungsabschnitt (504) konfiguriert ist, den Vektor, der den Laserstrahl zu der Position entlang des Schnittendabschnitts des Produkts bewegt, als den Vektor zu bestimmen, die die Richtung der Schwingung zum Zeitpunkt der Schwingung des Laserstrahls zur Rückseite definiert.

3. Laserbearbeitungsverfahren, umfassend:
Bewegen eines Bearbeitungskopfs (35), der einen Laserstrahl aus einer Öffnung (36a) einer Düse (36) ausstrahlt, durch einen Bewegungsmechanismus (22, 23) relativ bezüglich eines Metallblechs (W) entlang einer Oberfläche des Metallblechs (W), um ein Produkt zu produzieren, das eine festgelegte Form aufweist, in welcher ein Endabschnitt des Produkts, der zu schneiden ist, um das Produkt zu produzieren, eine kurvenförmige Form aufweist, indem das Metallblech (W) geschnitten wird;
Schwingen des Laserstrahls, mit welchem das Metallblech (W) bestrahlt wird, um das Produkt zu produzieren, durch einen Strahlschwingungsmechanismus (32), während der Bearbeitungskopf (35) durch den Bewegungsmechanismus (22, 23) relativ bewegt wird;
Steuern des Bewegungsmechanismus (22, 23) mit einem Bewegungsmechanismus-Steuerungsabschnitt (505), um den Bearbeitungskopf (35) relativ zu bewegen, mit einem ersten Steuerintervall; und
Steuern des Strahlschwingungsmechanismus (32) mit einem Schwingungssteuerungsabschnitt (504), um den Laserstrahl zu schwingen, mit einem zweiten Steuerintervall, das kürzer als das erste Steuerintervall ist,
ferner umfassend, durch den Schwingungssteuerungsabschnitt (504):
Bestimmen eines Vektors, der eine Schwingungsrichtung zur Schwingung des Laserstrahls in einem festgelegten Schwingungsmuster definiert, mit dem zweiten Steuerintervall; und
Steuern des Strahlschwingungsmechanismus (32), um den Laserstrahl in dem festgelegten Schwingungsmuster basierend auf dem bestimmten Vektor zu schwingen, mit dem zweiten Steuerintervall,
**gekennzeichnet durch**, durch den Schwingungssteuerungsabschnitt (504):
Steuern des Strahlschwingungsmechanismus (32), um den Laserstrahl in einem parallelen Schwingungsmuster zu schwingen, das eine Schwingung zu einer Vorderseite in einer Schneidvorschubrichtung des Metallblechs (W) durch den Laserstrahl und eine Schwingung zu einer Rückseite wiederholt; und
Bestimmen des Vektors, der den Laserstrahl zu einer Position entlang des Endabschnitts des Produkts bewegt, als den Vektor, der eine Richtung der Schwingung zu einem Zeitpunkt der Schwingung des Laserstrahls zur Vorderseite definiert.

4. Das Laserbearbeitungsverfahren nach Anspruch 3, ferner umfassend ein Bestimmen, durch den Schwingungssteuerungsabschnitt (504), des Vektors, der den Laserstrahl zu der Position entlang des Schneidendabschnitts des Produkts bewegt, als einen Vektor, der die Richtung der Schwingung zum Zeitpunkt der Schwingung des Laserstrahls zur Rückseite definiert.

## Revendications

1. Appareil d'usinage au laser (100) comprenant :
un oscillateur laser (10) configuré pour générer et émettre un faisceau laser,
un mécanisme de déplacement (22, 23) configuré pour déplacer de façon relative une tête d'usinage (35) qui émet un faisceau laser depuis une ouverture (36a) d'une buse (36) par rapport à une tôle métallique (W) le long d'une surface de la tôle métallique (W) afin de générer un produit présentant une forme prédéterminée, dans lequel une extrémité du produit à découper pour fabriquer le produit est de forme curvilinéaire, en découpant la tôle métallique (W),
un mécanisme de vibration de faisceau (32) configuré pour faire vibrer le faisceau laser avec lequel est illuminée la tôle métallique (W) pour fabriquer le produit tout en déplaçant de façon relative la tête d'usinage (35) grâce au mécanisme de déplacement (22, 23),
une section de commande de mécanisme de déplacement (505) configurée pour piloter le mécanisme de déplacement (22, 23) afin de déplacer de façon relative la tête d'usinage (35) avec une première période de commande, et
une section de commande de vibration (504) configurée pour piloter le mécanisme de vibration de faisceau (32) afin de faire vibrer le faisceau laser avec une seconde période de commande plus courte que la première période de commande,
dans lequel la section de commande de vibration (504) est configurée :
pour déterminer un vecteur qui définit une direction de vibration destinée à faire vibrer le faisceau laser selon une séquence prédéterminée de vibration avec la seconde période de commande, et
pour piloter le mécanisme de vibration de faisceau (32) pour faire vibrer le faisceau laser selon la séquence prédéterminée de vibration sur la base du vecteur déterminé avec la seconde période de commande,
**caractérisé en ce que** la section de commande de vibration (504) est configurée :
pour piloter le mécanisme de vibration de faisceau (32) pour faire vibrer le faisceau laser selon une séquence de vibration parallèle qui répète la vibration vers un côté avant dans la direction d'avance de découpe par le faisceau laser de la tôle métallique (W), ainsi que de vibration vers un côté arrière, et
pour déterminer le vecteur qui déplace le faisceau laser vers une position située le long de l'extrémité du produit en tant que vecteur qui définit la direction de la vibration à l'instant de la mise en vibration du faisceau laser vers le côté avant.

2. Appareil d'usinage au laser (100) selon la revendication 1,
dans lequel la section de commande de vibration (504) est configurée pour déterminer le vecteur qui déplace le faisceau laser vers la position le long de l'extrémité de découpe du produit en tant que vecteur qui définit la direction de la vibration à l'instant de la mise en vibration du faisceau laser vers le côté arrière.

3. Procédé d'usinage au laser comprenant :
le déplacement relatif, grâce à un mécanisme de déplacement (22, 23), d'une tête d'usinage (35) qui émet un faisceau laser depuis une ouverture (36a) d'une buse (36) par rapport à une tôle métallique (W) le long d'une surface de la tôle métallique (W) afin de générer un produit présentant une forme prédéterminée, dans lequel une extrémité du produit à découper pour fabriquer le produit est de forme curvilinéaire, en découpant la tôle métallique (W),
la mise en vibration, grâce à un mécanisme de vibration de faisceau (32), du faisceau laser avec lequel est illuminée la tôle métallique (W) pour fabriquer le produit tout en déplaçant de façon relative la tête d'usinage (35) grâce au mécanisme de déplacement (22, 23),
la commande, grâce à une section de commande de mécanisme de déplacement, 505), du mécanisme de déplacement (22, 23) afin de déplacer de façon relative la tête d'usinage (35) avec une première période de commande, et
la commande, grâce à une section de commande de vibration (504), du mécanisme de vibration de faisceau (32) afin de faire vibrer le faisceau laser avec une seconde période de commande plus courte que la première période de commande,
comprenant en outre, par la section de commande de vibration (504) :
la détermination d'un vecteur qui définit une direction de vibration destinée à faire vibrer le faisceau laser selon une séquence prédéterminée de vibration avec la seconde période de commande, et
la commande du mécanisme de vibration de faisceau (32) pour faire vibrer le faisceau laser selon la séquence prédéterminée de vibration sur la base du vecteur déterminé avec la seconde période de commande,
**caractérisé par,** grâce à la section de commande de vibration (504) :
la commande du mécanisme de vibration de faisceau (32) pour faire vibrer le faisceau laser selon une séquence de vibration parallèle qui répète la vibration vers un côté avant dans la direction d'avance de découpe par le faisceau laser de la tôle métallique (W), ainsi que de vibration vers un côté arrière, et
la détermination du vecteur qui déplace le faisceau laser vers une position située le long de l'extrémité du produit en tant que vecteur qui définit la direction de la vibration à l'instant de la mise en vibration du faisceau laser vers le côté avant.

4. Procédé d'usinage au laser selon la revendication 3, comprenant en outre, par la section de commande de vibration (504), la détermination du vecteur qui déplace le faisceau laser vers la position le long de l'extrémité de découpe du produit en tant que vecteur qui définit la direction de la vibration à l'instant de la mise en vibration du faisceau laser vers le côté arrière.
